(19) Europäisches Patentamt / European Patent Office / Office européen des brevets

(11) **EP 2 190 156 A2**

(12) **EUROPEAN PATENT APPLICATION**

(43) Date of publication:
26.05.2010 Bulletin 2010/21

(51) Int Cl.:
***H04L 25/03*** *(2006.01)*

(21) Application number: 09014178.9

(22) Date of filing: 12.11.2009

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA RS

(30) Priority: 21.11.2008 JP 2008297629
16.07.2009 JP 2009167461

(71) Applicant: Sony Corporation
Tokyo (JP)

(72) Inventors:
• **Muramatsu, Hirotaka**
**Tokyo (JP)**
• **Kikuchi, Akihiro**
**Tokyo (JP)**
• **Fukuda, Shinichi**
**Tokyo (JP)**

(74) Representative: **Müller - Hoffmann & Partner**
**Patentanwälte**
**Innere Wiener Strasse 17**
**81667 München (DE)**

(54) **Communication apparatus, communication frame format, and signal processing method**

(57)     A communication apparatus includes a signal detection section that detects received information from a signal received through wireless communication. The signal detection section includes: a wave detection section that receives a signal in which the received information is superimposed on a carrier signal and that analyzes variations in an envelope of the received signal to generate a wave-detection signal containing the received information; an equalization processing section that corrects the wave-detection signal to output a corrected wave-detection signal; a detection section that receives the corrected wave-detection signal to detect the received information; and a training data detection section that detects from the received signal a training-data-detection sync signal allowing detection of training data utilized to optimize equalization characteristics of the equalization processing section. The equalization processing section starts a training process, in which the training data contained in the received signal are utilized, on the basis of the sync signal.

FIG. 1A

**Description**

BACKGROUND OF THE INVENTION

1. Field of the Invention

The present invention relates to a communication apparatus, a communication frame format, and a signal processing method. The present invention relates in particular to a communication apparatus, a communication frame format, and a signal processing method applicable to proximity communication performed with an IC card, for example.

2. Description of the Related Art

In recent years, portable terminals such as IC cards and cellular phones with a proximity communication function have been used widely. Examples of technologies employing such terminals include FeliCa (registered trademark), which is an IC card system developed by Sony Corporation. Examples of proximity communication standards include an NFC (Near Field Communication) standard, which is a short-distance wireless communication standard developed by Sony Corporation and Royal Philips Electronics.

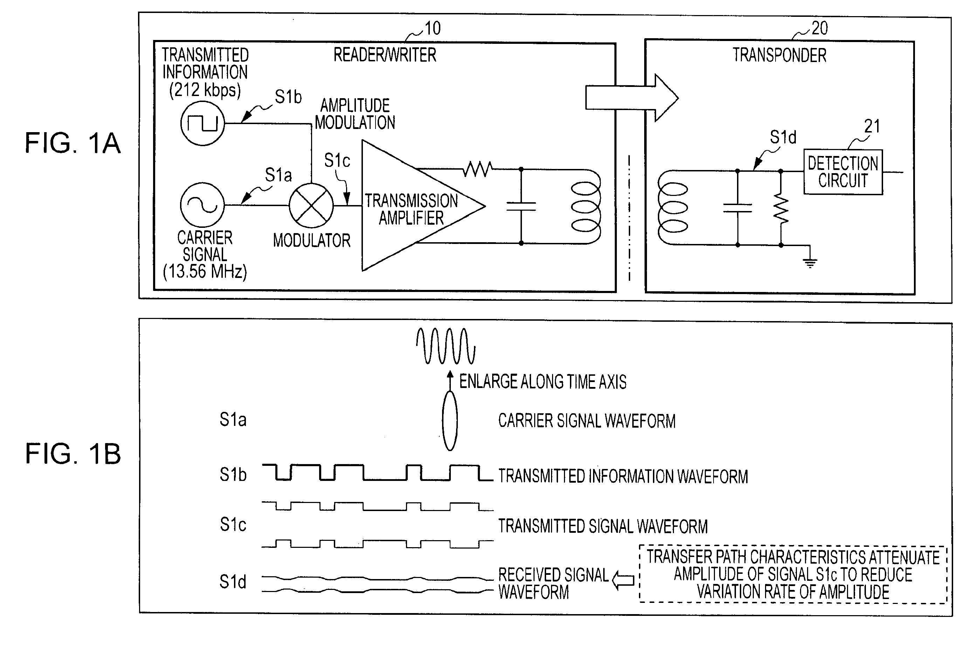

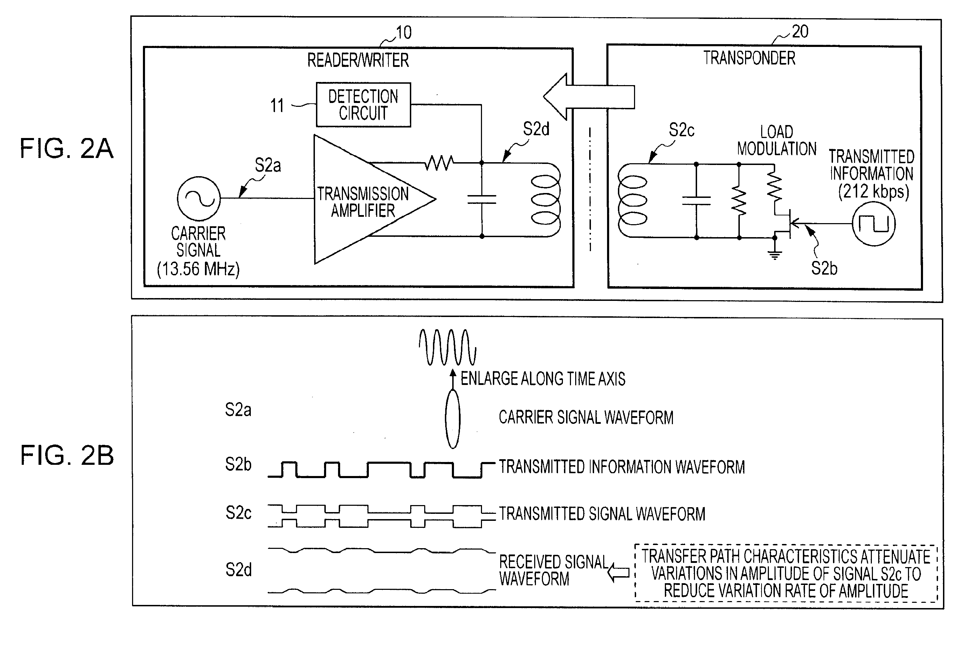

Proximity communication is performed between a sender and a recipient using a carrier frequency of 13.56 MHz, for example, and with a sender-recipient distance of 0 cm (with which the sender and the recipient contact each other) to dozen or so cm. An outline of proximity communication is described with reference to Figs. 1A, 1B, 2A, and 2B. With the sender-recipient distance mentioned above, the sender and the recipient may be considered to be magnetically coupled to each other with their transmission/reception antennas serving as coils. That is, the antennas are considered to form a pair of transformer windings.

Figs. 1A and 1B show a process of data transmission from a reader/writer 10 to a transponder 20 which may be an IC card. Figs. 2A and 2B show a process of data transmission from the transponder 20 to the reader/writer 10.

The process of data transmission from the reader/writer 10 to the transponder 20 which may be an IC card is described with reference to Figs. 1A and 1B. As shown in Fig. 1A, the reader/writer 10 superposes information to be transmitted (signal S1b) of 212 kbps on a carrier signal (signal S1a) of 13.56 MHz to prepare a modulated signal (signal S1c), and transmits the modulated signal from a transmission amplifier to the transponder 20 via a coil. The transponder 20 receives a signal (signal S1d) via a coil.

Fig. 1B shows the waveforms of the signals S1a through S1d which are:

carrier signal waveform (signal S1a);
transmitted information waveform (signal S1b);
transmitted signal waveform (signal S1c); and
received signal waveform (signal S1d).

An ASK (Amplitude Shift Keying) modulation scheme is adopted as a modulation scheme.

The process of data transmission from the transponder 20 which may be an IC card to the reader/writer 10 is described with reference to Figs. 2A and 2B. As shown in Fig. 2A, the reader/writer 10 transmits a carrier signal (signal S2a) of 13.56 MHz from a transmission amplifier to the transponder 20 via a coil. The transponder 20 modulates information to be transmitted (signal S2b) of 212 kbps to generate a signal to be transmitted (signal S2c), and transmits the generated signal to the reader/writer 10. The reader/writer 10 receives a signal (signal S2d) via a coil.

Fig. 2B shows the waveforms of the signals S2a through S2d which are:

carrier signal waveform (signal S2a);
transmitted information waveform (signal S2b);
transmitted signal waveform (signal S2c); and
received signal waveform (signal S2d).

Between the reader/writer 10 and the transponder 20 shown in Figs. 1A, 1B, 2A, and 2B, communication is performed with a sender-recipient distance of 0 cm (with which the reader/writer 10 and the transponder 20 contact each other) to dozen or so cm. With the sender-recipient distance mentioned above, the reader/writer 10 and the transponder 20 may be considered to be magnetically coupled to each other with their transmission/reception antennas serving as coils. That is, the antennas are considered to form a pair of transformer windings.

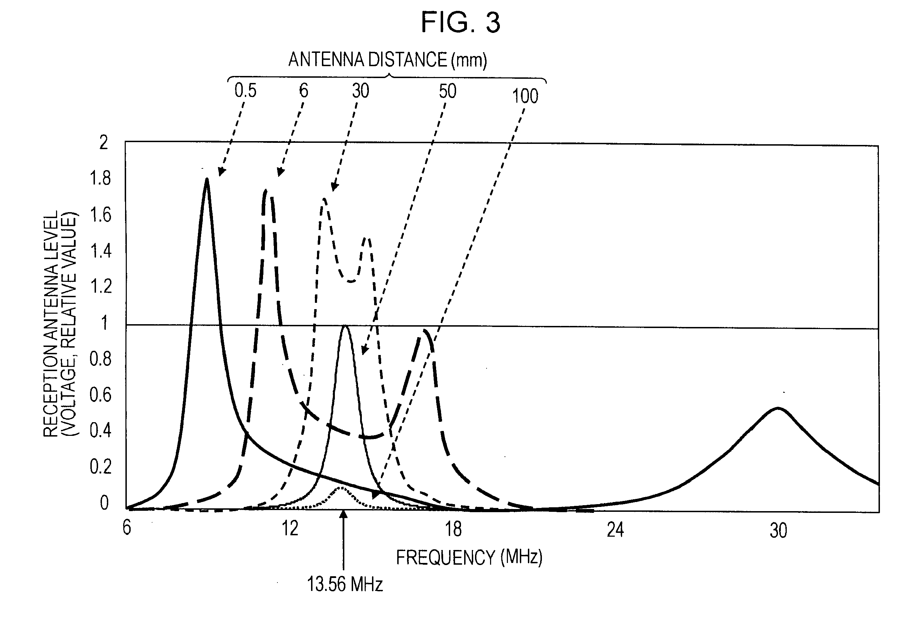

In the thus formed transformer, each coil is caused to resonate at the carrier frequency with high Q. A signal to be transferred is amplified by resonance around the carrier frequency to allow transfer to more remote locations. When the two resonating coils are so close to each other as to cause mutual interference, however, two separate peaks appear in the frequency characteristics of the transfer signal with the carrier frequency interposed between the two peaks as shown in Fig. 3.

Fig. 3 shows the correspondence between the frequency and the reception antenna level, that is, the frequency characteristics of the transfer signal, for each case where the distance between the antennas formed by coils is 0.5 to 100 mm. As shown in Fig. 3, only one peak appears around the carrier frequency of 13.56 MHz in the case where the antenna distance is 50 mm or 100 mm. Meanwhile, two separate resonance peaks appear in the case where the antenna distance is 30 mm, 6 mm, or 0.5 mm. This is because the two resonating coils are so close to each other as to cause mutual interference. As a result, the carrier frequency of 13.56 MHz is interposed between the two peaks.

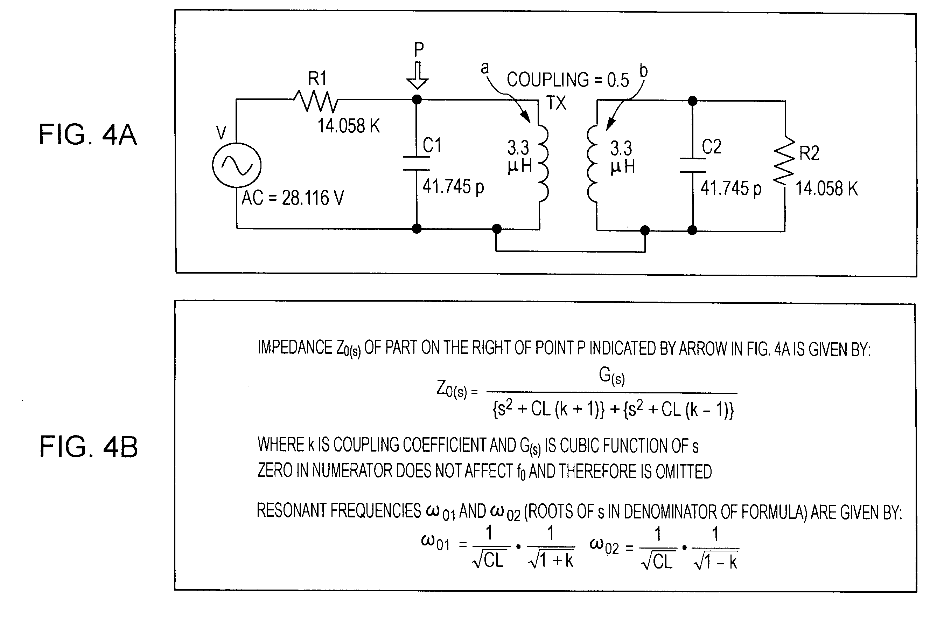

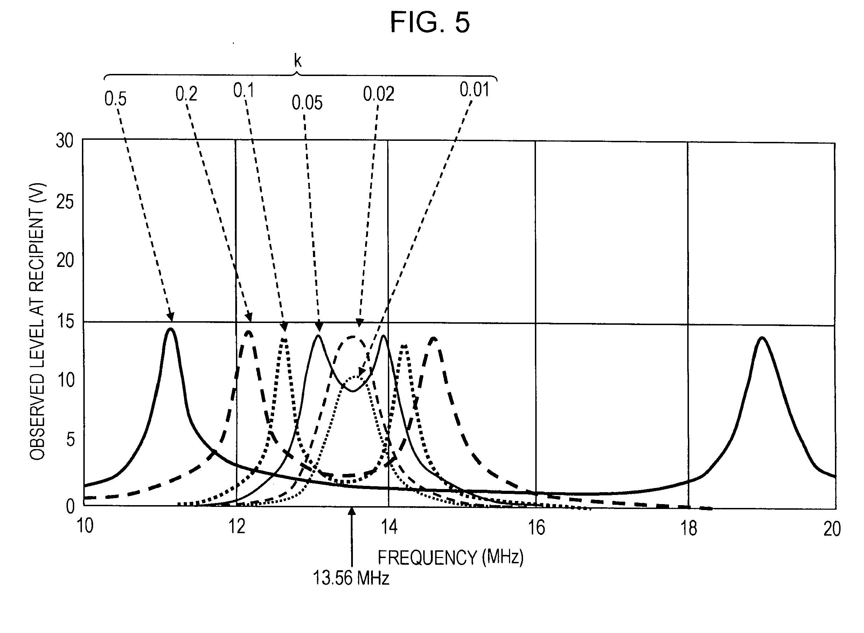

This is ascribable to the fact that the resonant frequencies of two coils vary in accordance with the distance between the coils. The principle of this phenomenon is described with reference to Figs. 4A, 4B, and 5. Fig. 4A shows two coils a and b corresponding to the respective coils of the reader/writer 10 and the transponder 20 shown in Figs. 1A, 1B, 2A, and 2B. The impedance $Z_{0(s)}$ of the part on the right of the point P indicated by the arrow is given by the following formula (1):

$$Z_{O(s)} = \frac{G_{(s)}}{\{s^2 + CL(k+1)\} + \{s^2 + CL(k-1)\}} \quad \cdots (1)$$

In the above formula, k is a coupling coefficient, and $G_{(s)}$ is a cubic function of s (resonant frequency).

The resonant frequencies $\omega_{01}$ and $\omega_{02}$ indicated as the roots of s calculated from the above formula (1) are given by the following formulas:

$$\omega_{O1} = \frac{1}{\sqrt{CL}} \bullet \frac{1}{\sqrt{1+k}}$$

$$\omega_{O2} = \frac{1}{\sqrt{CL}} \bullet \frac{1}{\sqrt{1-k}}$$

As is understood from the above formulas, the resonant frequencies $\omega_{01}$ and $\omega_{02}$ vary in accordance with the value of the coupling coefficient k. Fig. 5 shows how the resonant frequencies $\omega_{01}$ and $\omega_{02}$ vary in accordance with the value of the coupling coefficient k. Fig. 5 shows the correspondence between the frequency and the received signal level in each case where the coupling coefficient k is 0.01 to 0.5.

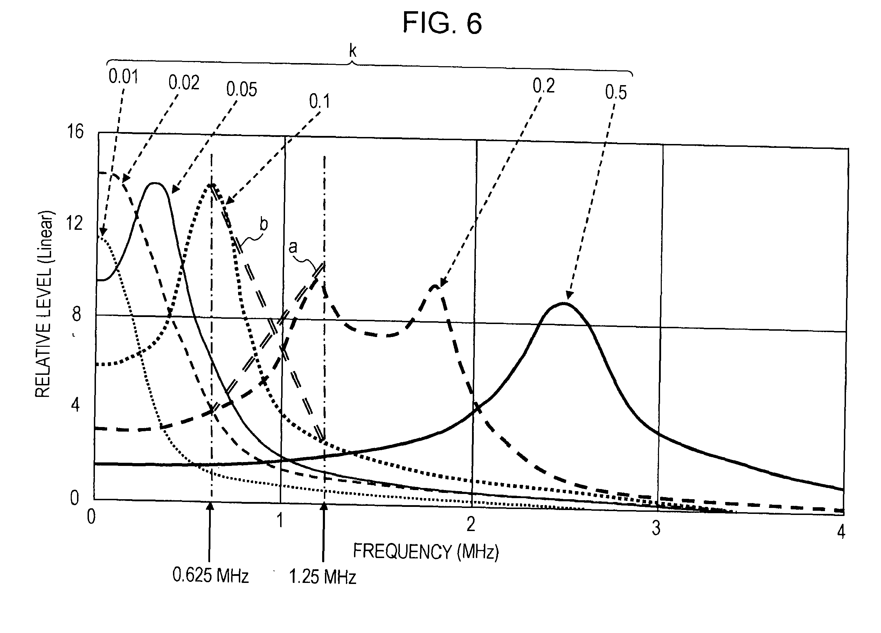

The frequency characteristics of the transfer signal around the carrier frequency (13.56 MHz) are reflected in the frequency characteristics of a wave-detected signal (signal converted to the baseband). That is, the frequency characteristics of a baseband signal coincide with the frequency characteristics of the transfer signal around the carrier frequency with the carrier frequency converted to DC. The frequency characteristics of a baseband signal obtained by decoding a carrier that has passed through a system with the characteristics shown in Fig. 5 are shown in Fig. 6.

Fig. 6 shows the frequency characteristics of the baseband, or the correspondence between the frequency and the relative level (Linear) of the reception intensity with in each of a plurality of cases where the coupling coefficient k is 0.01 to 0.5. The level of the carrier frequency (13.56 MHz) shown in Fig. 5 corresponds to the level of DC (frequency = 0 Hz) shown in Fig. 6. The average of the observed levels at the recipient at (13.56 + X) MHz and (13.56 - X) MHz shown in Fig. 5 corresponds to the relative level at a frequency of X (MHz) shown in Fig. 6.

In Fig. 6, a comparison is made for the frequency characteristics in the frequency range of 0.625 MHz to 1.25 MHz between cases with different coupling coefficients k.

With a coupling coefficient k of 0.2, the frequency characteristics are "on the increase" in the frequency range of 0.625 MHz to 1.25 MHz as indicated by the double dotted line a in Fig. 6. In other words, the relative level of the reception intensity tends to become higher as the frequency becomes higher.

With a coupling coefficient k of 0.1, on the other hand, the frequency characteristics are "on the decrease" in the frequency range of 0.625 MHz to 1.25 MHz as indicated by the double dotted line b in Fig. 6. In other words, the relative level of the reception intensity tends to become lower as the frequency becomes higher.

If the communication distance is estimated on the basis of the corresponding points on the characteristic curves (peak frequencies) shown in Figs. 3 and 5:

the antenna distance is estimated to be approximately 14 mm for the frequency characteristics with a coupling coefficient k of 0.2 shown in Fig. 5; and
the antenna distance is estimated to be approximately 20 mm for the frequency characteristics with a coupling coefficient k of 0.1 shown in Fig. 5.

In the communication scheme, even slight variations in the distance may result in great variations in the reception intensity or the resonant frequency.

In the case where the coupling coefficient k is small, that is, the communication distance is long, the characteristics are sharply attenuated in the high range. In the case where the coupling coefficient is great, that is, the communication distance is short, the characteristics have a peak in the high range.

Such variations in the frequency characteristics are not so problematic in the related art. This is because the transfer rate utilized in systems according to the related art is not so high. For example, FeliCa (registered trademark) and the NFC standard described above adopt Manchester code with a transfer rate of 212 kbps. That is, the highest waveform repetition frequency is 212 kHz.

As seen in Fig. 6, although the characteristics at 212 kHz have fallen to about half the level at DC with long communication distances, the characteristics are nearly flat with most communication distances. Therefore, no great distortion is caused by the frequency characteristics of the channel (transfer path), posing no obstacle to [1/0] determination of the received signal.

When the transfer rate is increased, however, the spectrum of the baseband signal is widened in accordance with the ratio of the increase. An accordingly wider frequency band is thus necessary during wave detection of the received signal. This increases the influence of the frequency characteristics of the channel, unfavorably increasing the error rate of the data.

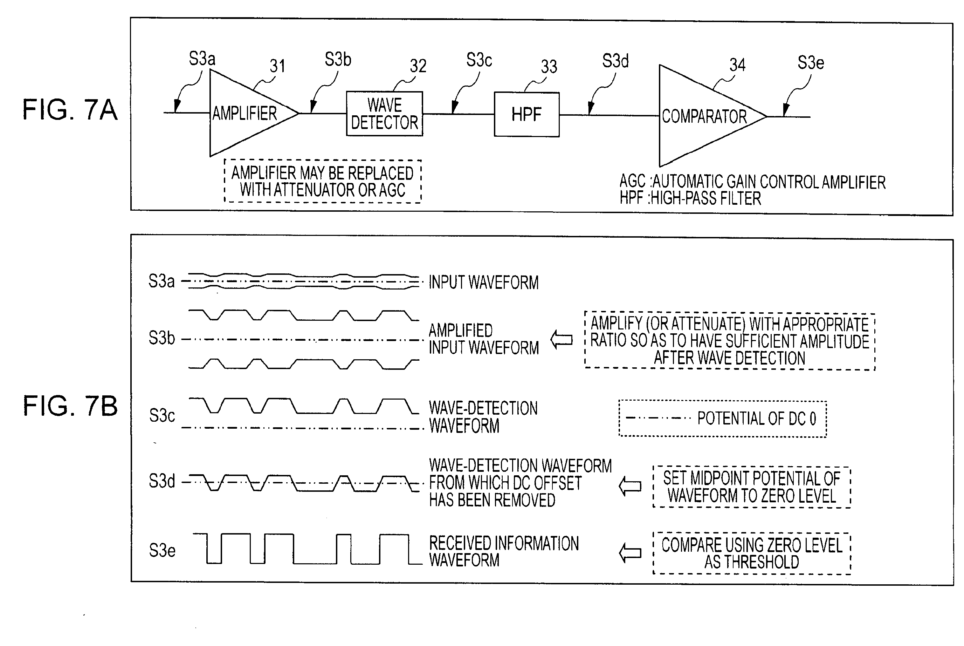

A general configuration of a detection circuit for a received signal in a communication apparatus according to the related art and a signal detected by the detection circuit are described with reference to Figs. 7A and 7B. Fig. 7A shows the configuration of a detection circuit for a received signal in a communication apparatus according to the related art. The detection circuit corresponds to a detection circuit 21 of the transponder 20 which may be an IC card shown in Fig. 1A or a detection circuit 11 of the reader/writer 10 shown in Fig. 2A, for example. Fig. 7B shows the waveforms of signals at respective points of the detection circuit shown in Fig. 7A.

As shown in Fig. 7A, the detection circuit includes an amplifier 31, a wave detector 32, a high-pass filter (HPF) 33, and a comparator 34. The received signal input via a coil acting as an antenna has an input waveform [signal S3a] shown in Fig. 7B.

The input waveform [signal S3a] is amplified or attenuated at an appropriate ratio by the amplifier 31 so as to have a sufficient amplitude. The amplifier 31 outputs [signal S3b] shown in Fig. 7B. The amplifier 31 may be formed by an attenuator or an automatic gain controller (AGC).

An output [signal S3b] of the amplifier 31 is input to the wave detector 32. The wave detector 32 performs a wave-detection process to extract information on the amplitude of the amplified signal. As a result, the amplifier 32 outputs [signal S3c] shown in Fig. 7B.

The wave-detection signal [signal S3c] from the wave detector 32 is input to the HPF 33. The HPF 33 removes direct-current components from the wave-detection signal [signal S3c] to set the midpoint potential of the waveform to the zero level, generating a wave-detection waveform from which DC offset has been removed. Thus, [signal S3d] shown in Fig. 7B is obtained.

An output of the HPF 33, that is, the wave-detection waveform [signal S3d] from which DC offset has been removed, is input to the comparator 34.. The comparator 34 generates a [1/0] binary signal using the zero level as a threshold, and outputs the generated signal. That is, the comparator 34 generates [signal S3e] shown in Fig. 3B as a received information waveform, and outputs the generated signal.

The received signal detection circuit used in proximity communication according to the related art has the configuration shown in Fig. 7, and performs signal processing using the configuration to generate a binary signal [signal S3d] as received information from [signal S3a] as a received signal.

The configuration enables processing at a low transfer rate of about 212 kbps. At a higher transfer rate, however, the signal may be distorted greatly by the frequency characteristics of the channel (transfer path), which may make it difficult to perform accurate [1/0] determination on the basis of the wave-detection waveform with DC offset removed.

In order to improve the precision of signal detection, a technique of correcting distortion of a received signal has been proposed. Such a technique is disclosed in Japanese Unexamined Patent Application Publication No. Hei 01-202954 and Japanese Unexamined Patent Application Publication No. 2004-297536, for example. In the techniques disclosed in the publications, data to be transmitted are provided with a training signal (learning signal) allowing an optimum correction process according to the frequency characteristics of a received signal so that optimum correction is performed using the training signal.

In the techniques disclosed in the publications, however, the data recipient may not be able to grasp the accurate timing at which to start training. For example, in the case where a training process is started after the completion of a synchronization process using a pre-amble signal at the head of a packet, the start timing may be varied in accordance with the reception status. As a result, it is highly likely that the optimization process which uses the training signal is delayed. This may hinder optimum correction of necessary received data, and may cause an error in reading the received data.

SUMMARY OF THE INVENTION

It is therefore desirable to provide a communication apparatus, a communication frame format, and a signal processing method that enable accurate data reception with a reduced error rate.

According to a first embodiment of the present invention, there is provided a communication apparatus including: a signal detection section that detects received information from a signal received through wireless communication, the signal detection section including a wave detection section that receives a ,signal in which the received information is superimposed on a carrier signal and that analyzes variations in an envelope of the received signal to generate a wave-detection signal containing the received information; an equalization processing section that corrects the wave-detection signal to output a corrected wave-detection signal; a detection section that receives the corrected wave-detection signal generated by the equalization processing section to detect the received information; and a training data detection section that detects from the received signal a training-data-detection sync signal allowing detection of training data utilized to optimize equalization characteristics of the equalization processing section, in which the equalization processing section starts a training process, in which the training data contained in the received signal are utilized, on the basis of the sync signal detected by the training data detection section.

In the communication apparatus according to the embodiment of the present invention, the equalization processing section may include: a filter section that performs a filtering process employing a filter coefficient; and a filter coefficient setting section that outputs the filter coefficient to the filter section, and the filter coefficient setting section may update the filter coefficient so as to reduce an error between an output of the filter section and a predefined reference signal in the training process in which the training data are utilized.

In the communication apparatus according to the embodiment of the present invention, the equalization processing section may include an FIR (Finite Impulse Response) filter.

In the communication apparatus according to the embodiment of the present invention, the communication apparatus may further include an analog-digital converter that performs a digital conversion process on the wave-detection signal generated by the wave detection section to generate a digital signal, and the equalization processing section may receive the digital signal, filter the digital signal employing the filter coefficient to generate a corrected digital signal, and output the corrected digital signal to the detection section.

In the communication apparatus according to the embodiment of the present invention, the communication apparatus may further include a reference signal output section that outputs to the equalization processing section the reference signal utilized in the training process performed by the equalization processing section, and the reference signal output section may output the reference signal to the equalization processing section on the basis of the sync signal detected by the training data detection section.

In the communication apparatus according to the embodiment of the present invention, the training data detection section may include a correlation detection section that detects correlation with the received signal using a reference signal that has a signal pattern identical to that of the sync signal and that is contained in the received signal, and a position at which the correlation is at its peak that is detected by the correlation detection section may be determined to be a position of the training-data-detection sync signal.

According to a second embodiment of the present invention, there is provided a communication apparatus including: a packet generation section that generates data to be transmitted through wireless communication; and a transmission section that outputs a packet generated by the packet generation section, in which the packet generation section generates a packet containing training data allowing determination of optimum equalization characteristics of an equalization processing section of a data recipient, and a sync signal allowing detection of a position of the training data.

In the communication apparatus according to the embodiment of the present invention, the packet generation section may generate a packet in which the sync signal is in a signal region at a low frequency compared to other constituent data in the packet.

According to a third embodiment of the present invention, there is provided a communication frame format for a packet to be transferred through wireless communication, including:

training data allowing determination of optimum equalization characteristics of an equalization processing section of a data recipient; and a sync signal allowing detection of a position of the training data, in which the data recipient which receives the packet is enabled to start training, in which the training data are utilized, in response to detecting the sync signal from the received packet.

In the communication frame format according to the embodiment of the present invention, the sync signal may be in a signal region at a low frequency compared to other constituent data in the packet.

According to a fourth embodiment of the present invention, there is provided a signal processing method performed in a communication apparatus that receives data through wireless communication, including the steps of: a training data detection section detecting from a received signal a training-data-detection sync signal allowing detection of training data utilized to optimize equalization characteristics of an equalization processing section; and the equalization processing section starting a training process, in which the training data contained in the received signal are utilized, in response to the training data detection section detecting the training-data-detection sync signal.

According to a fifth embodiment of the present invention, there is provided a signal processing method performed in a communication apparatus that generates data to be transmitted through wireless communication, including the steps of: a packet generation section generating a packet to be transmitted; and a transmission section outputting the packet generated by the packet generation section, in which the packet generation step includes generating a packet containing training data allowing determination of optimum equalization characteristics of an equalization processing section of a data recipient, and a sync signal allowing detection of a position of the training data.

Further objects, characteristics, and advantages of the present invention will become apparent upon reading the following detailed description of embodiments of the present invention given with reference to the accompanying drawings.

According to an embodiment of the present invention, in a configuration for detecting received information from a signal received through wireless communication, a wave detection section receives information superimposed on a carrier signal to generate a wave-detection signal containing the received information, and an adaptive equalization processing section corrects distortion contained in the wave-detection signal, that is, distortion caused in a wireless communication path. A packet contains training data employed to optimize equalization characteristics of the adaptive equalization processing section, and a training-data-detection sync signal allowing detection of the training data. It is possible for a recipient to reliably perform a training process in which the training data are utilized by detecting the training-data-detection sync signal.

BRIEF DESCRIPTION OF THE DRAWINGS

Fig. 1A illustrates a general configuration of communication apparatuses that perform proximity communication;

Fig. 1B illustrates an exemplary process performed on a transmission/reception signal in the proximity communication;

Fig. 2A illustrates a general configuration of communication apparatuses that perform proximity communication;

Fig. 2B illustrates an exemplary process performed on a transmission/reception signal in the proximity communication;

Fig. 3 illustrates mutual interference that occurs in the frequency characteristics of a transfer signal when two resonating coils are close to each other;

Fig. 4A illustrates the principle of the fact that the resonant frequencies of two coils vary in accordance with the distance between the coils and that a carrier frequency of 13.56 MHz is interposed between two peaks in the frequency characteristics, providing a verification of the appearance of separate peaks through calculation;

Fig. 4B illustrates the principle of the fact that the resonant frequencies of two coils vary in accordance with the distance between the coils and that a carrier frequency of 13.56 MHz is interposed between two peaks in the frequency characteristics, providing a description and formulas for the verification;

Fig. 5 illustrates how the resonant frequencies of two coils vary in accordance with the distance between the coils and the principle of the fact that a carrier frequency of 13.56 MHz is interposed between two peaks in the frequency characteristics, showing the correspondence between the frequency and the received signal level;

Fig. 6 illustrates the frequency characteristics of a baseband signal obtained by decoding a carrier that has passed through a system with the characteristics shown in Fig. 5;

Fig. 7A illustrates a general configuration of a detection circuit for a received signal in a communication apparatus according to the related art;

Fig. 7B illustrates a detection signal in the detection circuit according to the related art;

Fig. 8 illustrates an exemplary configuration of communication apparatuses according to an embodiment of the present invention;

Fig. 9 illustrates the configuration of a detection circuit in a communication apparatus according to the embodiment of the present invention;

Fig. 10 illustrates the transition of signals transmitted between constituent elements of the detection circuit shown in Fig. 9.

Fig. 11 illustrates a specific exemplary configuration of an adaptive equalization processing section in the detection circuit of the communication apparatus according to the embodiment of the present invention;

Fig. 12 illustrates an exemplary packet with training data bits;

Fig. 13 illustrates an exemplary configuration of a packet with a frame format according to an embodiment of the present invention;

Fig. 14A illustrates an example of a sync signal (SYNC) utilized to detect training data, showing a data signal at a normal rate;

Fig. 14B illustrates an example of a sync signal (SYNC) utilized to detect training data, showing a sync signal for training data detection;

Fig. 15 illustrates an example of a sync signal (SYNC) utilized to detect training data, showing the frequency characteristics of a baseband signal;

Fig. 16 illustrates an example of the detection circuit of the communication apparatus according to the embodiment of the present invention;

Fig. 17 illustrates a detailed configuration of, and a process performed by, a training data detection section in the detection circuit of the communication apparatus according to the embodiment of the present invention;

Fig. 18A illustrates an exemplary configuration of a packet with a frame format according to an embodiment of the present invention, showing a training-exclusive packet;

Fig. 18B illustrates an exemplary configuration of a packet with a frame format according to an embodiment of the present invention, showing a normal data packet;

Fig. 19A illustrates a first exemplary sequence of communication to which a training-exclusive packet is applied; and

Fig. 19B illustrates a second exemplary sequence of communication to which a training-exclusive packet is applied.

## DESCRIPTION OF THE PREFERRED EMBODIMENTS

Hereinafter, a communication apparatus, a communication frame format, and a signal processing method according to an embodiment of the present invention will be described in detail with reference to the drawings.

Hereinafter, the embodiment of the present invention is described sequentially in the following order:

1. Configuration for Performing Adaptive Equalization Process in Detection Circuit of Reception Apparatus

2. Configuration for Performing Accurate Training Process Using Appropriate Sync Signal

    2-1. Embodiment in which Sync Signal (SYNC) Is Modified

    2-2. Embodiment in which Training-exclusive Packet Is Utilized

[1. Configuration for Performing Adaptive Equalization Process in Detection Circuit of Reception Apparatus]

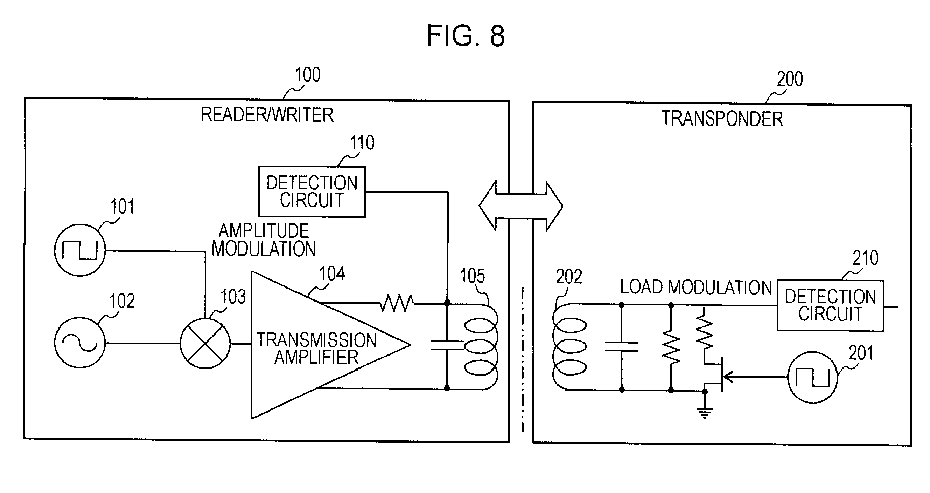

First, a configuration for performing an adaptive equalization process in a detection circuit of a reception apparatus is described. An exemplary configuration of communication apparatuses is described with reference to Fig. 8. Fig. 8 shows an exemplary combination of communication apparatuses that perform proximity communication similarly to the communication apparatuses described above with reference to Figs. 1A, 1B, 2A, and 2B. A reader/writer 100 and a transponder 200 which may be an IC card are shown as the communication apparatuses. The reader/writer 100 and the transponder 200 are each an example of the communication apparatus according to the embodiment of the present invention.

Data transmission is performed from the reader/writer 100 to the transponder 200 or from the transponder 200 to the reader/writer 100. The flow of the data transmission/reception process is the same as the flow described with reference to Figs. 1A, 1B, 2A, and 2B.

That is, in the process of data transmission from the reader/writer 100 to' the transponder 200 which may be an IC card, the reader/writer 100 superposes information to be transmitted 101 on a carrier signal 102 to generate a modulated signal with a modulator 103, and transmits the modulated signal from a transmission amplifier 104 to the transponder 200 via a coil 105. The transponder 200 receives a signal via a coil 202, and detects the received signal with a detection circuit 210. An ASK (Amplitude Shift Keying) modulation scheme, for example, is adopted as a modulation scheme.

Meanwhile, the process of data transmission from the transponder 200 which may be an IC card to the reader/writer 100 is performed as described below. The reader/writer 100 transmits a carrier signal 102 to the transponder 200 via the coil 105. The transponder 200 modulates information to be transmitted 201 to generate a signal to be transmitted, and transmits the generated signal to the reader/writer 100 via the coil 202. The reader/writer 100 receives a signal via the coil 105, and detects the received signal with a detection circuit 110.

As described above, the basic sequence of the data transmission/reception process is the same as the sequence described with reference to Figs. 1A, 1B, 2A, and 2B. In the process described above with reference to Figs. 1A, 1B, 2A, and 2B, the transfer rate for the transmitted information is 212 kbps. According to the embodiment of the present invention, high-speed communication at a higher transfer rate is allowed. In order to analyze communication data transferred at a high rate, the configuration of the detection circuit, namely the detection circuit 110 of the reader/writer 100 or the detection circuit 210 of the transponder 200 shown in Fig. 8, is modified.

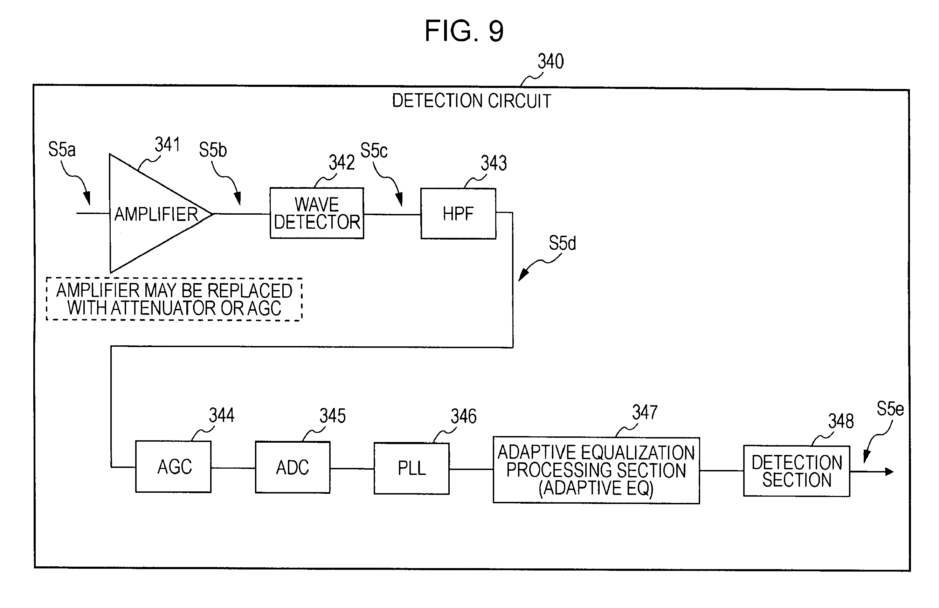

An exemplary configuration of the detection circuit in the communication apparatus is shown in Fig. 9. A detection circuit 340 shown in Fig. 9 functions as a signal detection section that detects received information from a signal received through wireless communication. The detection circuit 340 shown in Fig. 9 corresponds to the detection circuit 110 of the reader/writer 100 or the detection circuit 210 of the transponder 200 shown in Fig. 8.

In the case where communication is performed utilizing a channel (transfer path) with characteristics that vary greatly in accordance with the antenna distance as described above with reference to Fig. 6, an equalization circuit (EQ) that performs a specific process may not be able to handle the communication when the transfer rate is increased and a wider band is necessary. Thus, adaptive equalization in which an optimum correction process is performed in accordance with received data is preferably performed. The detection circuit 340 shown in Fig. 9 is an exemplary detection circuit with an EQ that performs such adaptive equalization in which different correction processes are performed in accordance with received data.

The detection circuit 340 extracts transmitted information superimposed on a carrier signal contained in a signal received via a coil functioning as an antenna to extract a [1/0] bit string forming received information.

As shown in Fig. 9, the detection circuit 340 includes an amplifier 341, a wave detector 342, a high-pass filter (HPF) 343, an automatic gain controller (AGC) 344, an analog-digital converter (ADC) 345, a PLL 346, an adaptive equalization circuit (adaptive EQ) 347, and a detection section 348. Thus, the detection circuit 340 in the communication apparatus according to the embodiment of the present invention includes an equalization circuit that performs correction by removing distortion from a signal contained in a wave-detection signal. The equalization circuit removes distortion caused in the channel (transfer path), enabling the detection section to accurately extract a bit string. In the case where digital signal processing is performed, an adaptive equalization circuit (adaptive equalizer) may be used. The adaptive equalization circuit automatically optimizes its equalization characteristics in accordance with how the input signal is distorted.

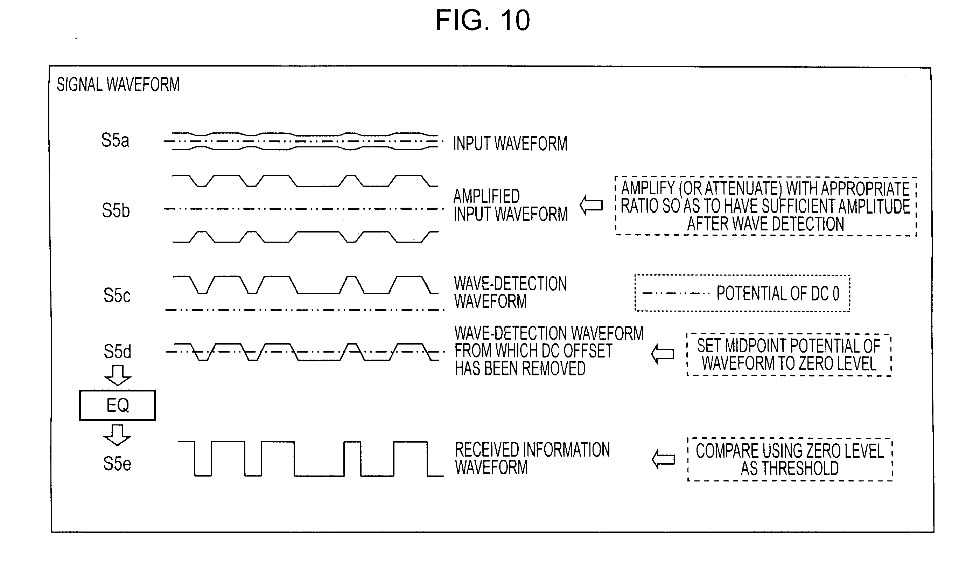

The transition of signals transmitted between constituent elements of the detection circuit 340 shown in Fig. 9 is described with reference to Fig. 10. Fig. 10 shows the waveforms of signals at respective points of the detection circuit 340 shown in Fig. 9.

The received signal input via a coil acting as an antenna has an input waveform [signal S5a] shown in Fig. 10. The input waveform [signal S5a] is amplified or attenuated at an appropriate ratio by the amplifier 341 so as to have a sufficient amplitude. The amplifier 341 outputs [signal S5b] shown in Fig. 10. The amplifier 341 may be formed by an attenuator or an automatic gain controller (AGC).

An output [signal S5b] of the amplifier 341 is input to the wave detector 342. The wave detector 342 performs a wave-detection process to extract information on the amplitude of the amplified signal. The wave detector 342 receives information superimposed on the carrier signal, and analyzes variations in the envelope of the carrier signal to generate a wave-detection signal containing the received information. As a result, the amplifier 342 outputs [signal S5c] shown in Fig. 10.

The wave-detection signal [signal S5c] from the wave detector 342 is input to the HPF 343. The HPF 343 removes direct-current components from the wave-detection signal [signal S5c] to set the midpoint potential of the waveform to the zero level, generating a wave-detection waveform from which DC offset has been removed. Thus, [signal S5d] shown in Fig. 10 is obtained.

An output of the HPF 343, that is, the wave-detection waveform [signal S5d] from which DC offset has been removed, is subjected to gain control performed by the AGC 344, and is then input to the ADC 345 to be converted into a digital signal.

Then, the digital signal is input to the PLL 346. The PLL 346 performs a PLL process in accordance with the data rate clock, and inputs the PLL process results to the adaptive EQ 347. The adaptive EQ 347 receives the PLL process results, and performs a signal correction process on the PLL process results through digital signal processing. The adaptive EQ 347 may be formed by an FIR (Finite Impulse Response) filter, for example. The FIR filter detects an error in each tap coefficient (filter coefficient) of the FIR filter on the basis of an error voltage between an output of the adaptive equalizer and a proper detection voltage, and performs automatic correction such that the error voltage is minimized. Such adaptive equalization allows a single circuit to handle communication even in a system in which it is necessary to provide equalization characteristics that vary greatly.

Then, the digital signal corrected by the adaptive EQ 347 is input to the detection section 348. The detection section 348 receives a corrected wave-detection signal as the digital signal generated by the adaptive EQ 347, and detects received information. The detection section 348 outputs a [1/0] binary signal on the basis of the corrected digital signal. That is, the detection section 348 generates [signal S5e] shown in Fig. 10 as a received information waveform, and outputs the generated signal.

In the detection circuit 340 shown in Fig. 9, it is possible for the detection section 348 to accurately analyze the received signal with a reduced error occurrence rate since the adaptive EQ 347 has removed distortion caused in the channel (transfer path). In the case where signal correction is performed by the adaptive EQ 347 formed by an FIR filter, for example, the equalization characteristics are automatically optimized in accordance with how the input signal is distorted, enabling various types of distortion caused in accordance with the state of the channel (transfer path) to be suitably corrected. This allows accurate detection of various received signals.

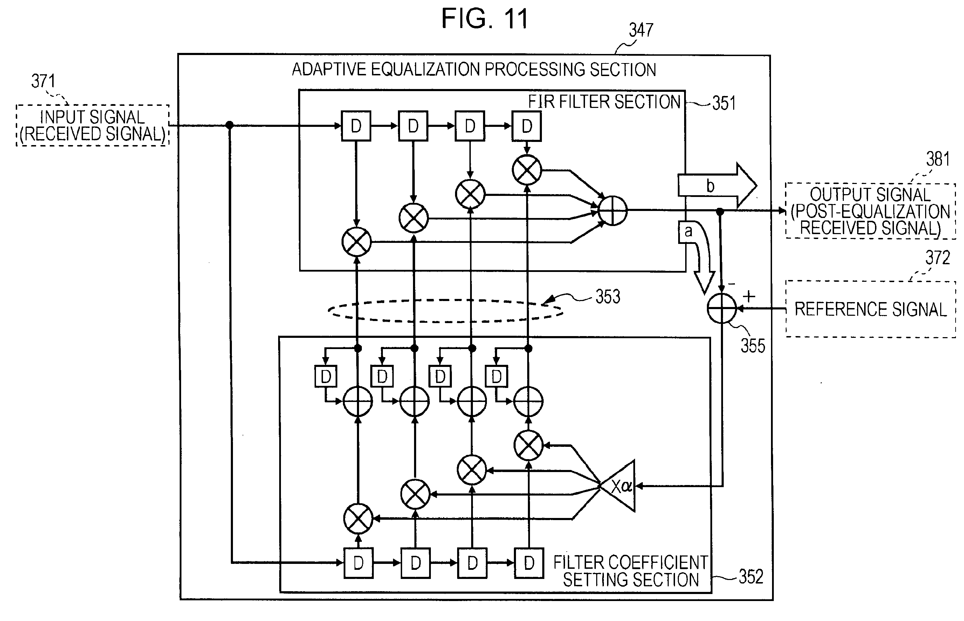

As discussed previously, the adaptive EQ 347 may be formed by an FIR filter, for example. An exemplary configuration of the adaptive EQ 347 formed by an FIR filter is shown in Fig. 11.

As shown in Fig. 11, the adaptive EQ 347 includes an FIR filter section 351 and a filter coefficient setting section 352. The FIR filter section 351 receives the digitalized wave-detection signal based on the received signal as an input signal 371.

The input bit string is input sequentially to delay elements [D] of the FIR filter section 351 and the filter coefficient setting section 352. In the FIR filter section 351, multipliers multiply respective outputs of the delay elements [D] by corresponding filter coefficients (tap coefficients) 353 output from the filter coefficient setting section 352, and then an adder adds outputs of the multipliers to output the addition results.

The adaptive EQ 347 performs a training (learning) process using training data to set the filter coefficient (tap coefficient) 353. During the training period, an output of the FIR filter section 351 is input to a difference calculation section 355 as indicated by the arrow [a] shown in Fig. 11. The difference calculation section 355 calculates the difference between the output of the FIR filter section 351 and a reference signal 372 as known data for training purposes, and inputs data on the calculated difference to the filter coefficient setting section 352.

The filter coefficient setting section 352 successively updates the filter coefficient so as to minimize the difference, and inputs the updated filter coefficient to the FIR filter section 351. The filter coefficient updating process may use a Least Mean Square (LMS) method, for example, as a process of reducing an error or the difference as much as possible. The filter coefficient obtained by repeatedly performing the filter coefficient updating process is applied to the equalization process.

The FIR filter section 351 performs a correction (equalization) process on the input signal 371 employing the filter coefficient set through the training process, and outputs the process results as indicated by the arrow (b) shown in Fig. 11. As a result of the process described above, an output signal (post-equalization received signal) 381 is obtained.

After the completion of the training, the adaptive EQ 347 performs a tracking process on data being input continuously. During the tracking period, a reference signal 372 is generated on the basis of a value obtained through binary determination of the output signal (post-equalization received signal) 381, and is input to the adaptive EQ 347. An output of the FIR filter section 351 is input to the difference calculation section 355 as in the training process. The difference calculation section 355 calculates the difference between the output of the FIR filter section 351 and the reference signal 372 for tracking purposes, and inputs data on the calculated difference to the filter coefficient setting section 352.

Also in the tracking process, as in the training process, the filter coefficient setting section 352 successively updates the filter coefficient so as to minimize the difference, and inputs the updated filter coefficient to the FIR filter section 351. In order to reduce the influence of an erroneously updated filter coefficient in the case where the value of the reference signal 372 for tracking purposes is not correct, it is desirable that the step gain value $\alpha$ for the tracking process be less than the step gain value for the training process.

The FIR filter section 351 performs a correction (equalization) process on the input signal 371 employing the filter coefficient successively updated through the tracking process, and outputs the process results as indicated by the arrow (b) shown in Fig. 11. As a result of the process described above, an output signal (post-equalization received signal) 381 is obtained.

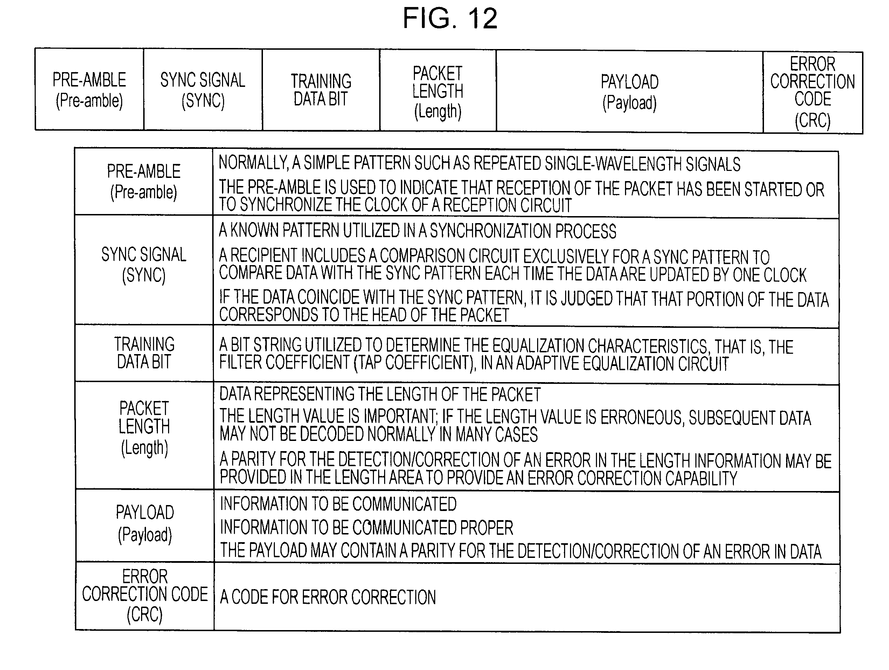

In order to allow a data recipient to perform such training (learning) as described above, training data bits are added to a packet transmitted from a data sender. An exemplary packet configuration is shown in Fig. 12.

As shown in Fig. 12, a packet contains a pre-amble (Pre-amble), a sync signal (SYNC), training data bits, a packet length (Length), a payload (Payload), and an error correction code (CRC). The respective data elements are described below.

Pre-amble

Normally, a simple pattern such as repeated single-wavelength signals. The pre-amble is used to indicate that reception of the packet has been started or to synchronize the clock of a reception circuit.

Sync signal (SYNC)

A known pattern utilized in a synchronization process. A recipient includes a comparison circuit exclusively for a SYNC pattern to compare data with the SYNC pattern each time the data are updated by one clock. If the data coincide with the SYNC pattern, it is judged that that portion of the data corresponds to the head of the packet.

Training data bits

A bit string utilized to determine the equalization characteristics, that is, the filter coefficient (tap coefficient), in an adaptive equalization circuit.

Packet length (Length)

Data representing the length of the packet. The Length value is important; if the Length value is erroneous, subsequent data may not be decoded normally in many cases. A parity for the detection/correction of an error in the Length information may be provided in the Length area to provide an error correction capability.

Payload

Information to be communicated proper. The payload may contain a parity for the detection/correction of an error in data.

Error correction code (CRC)

A code for error correction.

In a packet generation process, the communication apparatus at the data sender generates a packet in the format shown in Fig. 12, and transmits the generated packet. The communication apparatus at the data recipient performs the training process described above with reference to Fig. 11 utilizing the training data bits contained in the packet. The training data bits are a bit string also known to the recipient, and is equal to the reference signal 372 described with reference to Fig. 11.

It is possible to determine an optimum filter coefficient (tap coefficient) in accordance with the communication status by performing the training process utilizing the training data bits contained in the packet as described above.

In the case of the packet configuration shown in Fig. 12, however, the reception apparatus which receives a packet may not be able to accurately grasp the starting position of the training data bits.

It is necessary that data elements in the first part of a packet with the configuration shown in Fig. 12, that is, pre-amble through training data bits, be read before an equalization process is performed using an optimum filter coefficient.

Meanwhile, it is requested that data elements in the second part of a packet, that is, packet length and payload, be read with high precision after an equalization process is performed employing an optimum filter coefficient determined in advance through training in which the training data bits are utilized.

It is necessary that the respective data elements in the first part of a packet, that is, pre-amble through training data bits, be read before the execution of an optimum equalization process is made possible. This makes it difficult to determine the starting position of the training data bits on the basis of the data string. Consequently, the training process is performed without the accurate knowledge of the starting position of the training data bits. As a result, it is highly possible that the training process is delayed. If the completion of the training is delayed, an optimum equalization process for data elements such as payload, which should be read accurately, may not be started. This may lead to an error in reading the received data. A configuration that addresses the issue described above is described below.

[2. Configuration for Achieving Accurate Training Process Using Appropriate Sync Signal]

The configuration of an appropriate sync signal (SYNC) for achieving an accurate training process is described below. Specifically, the data sender transmits a packet with an appropriate sync signal (SYNC). Then, the data recipient detects the sync signal (SYNC), determines the accurate starting position of training data bits, and performs an accurate training process.

[2-1. Embodiment in which Sync Signal (SYNC) Is Modified]

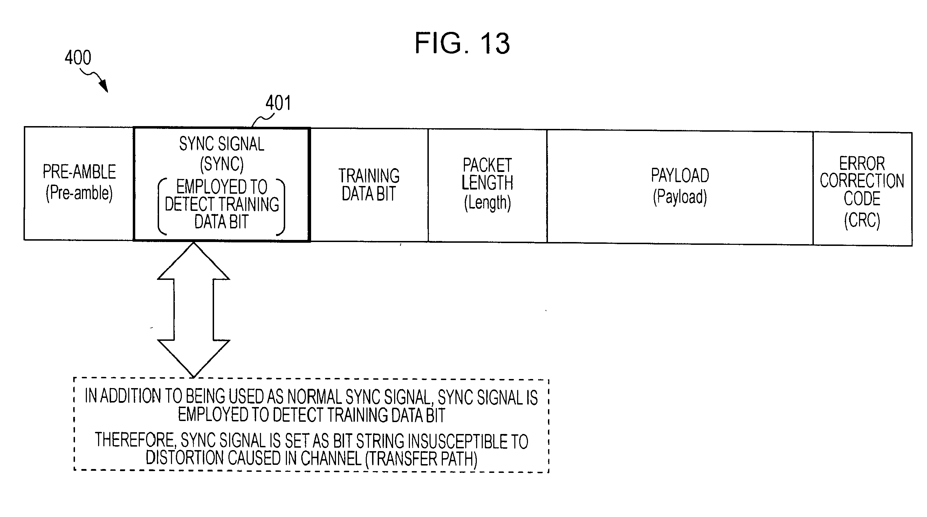

An exemplary configuration of a packet utilized in the embodiment is described with reference to Fig. 13. Fig. 13 shows an exemplary configuration of a packet 400 generated and transmitted by a packet generation section of the communication apparatus at the data sender. The packet 400 is different from the packet described above with reference to Fig. 12 in the configuration of a sync signal (SYNC) 401. The sync signal 401 of the packet 400 shown in Fig. 13 is utilized to detect the starting position of the training data bits.

The communication apparatus at the data sender may be the reader/writer 100 or the transponder 200 shown in Fig. 8, for example. The communication apparatus includes a packet generation section that generates data (a packet) to be transmitted through wireless communication and a transmission section that outputs the packet generated by the packet generation section. The packet generation section generates a packet with the frame format shown in Fig. 13, that is, a packet containing training data allowing determination of optimum equalization characteristics of an equalization processing section at the data recipient.

The sync signal (SYNC) is utilized to detect the starting position of the training data bits.

The training data bits are provided immediately after the sync signal (SYNC), and the adaptive equalization processing section starts training in response to detecting the sync signal (SYNC). This ensures that training in which the training data bits are utilized is started.

The sync signal (SYNC) is preferably set as a bit string insusceptible to distortion caused in the channel (transfer path). This is because the position detection is performed before the equalization processing section corrects (equalizes) the received data.

The training data bits are a bit string at the same bit rate, that is, with the same spectrum, as other constituent data of the packet such as packet length (Length), payload (Payload), and error correction code (CRC). The training data bits are also a pseudo-random bit string with a hardly biased bit pattern. The sync signal (SYNC) and the training data bits are known to both the sender and the recipient.

As discussed above, it is necessary that the sync signal (SYNC) be set as a bit string insusceptible to distortion caused in the channel (transfer path) because the sync signal (SYNC) is detected before the equalization processing section corrects (equalizes) the received data. Specifically, the sync signal (SYNC) is preferably a low-frequency bit string at a low bit rate, that is, with a narrow spectrum, compared to other stationary signals such as payload.

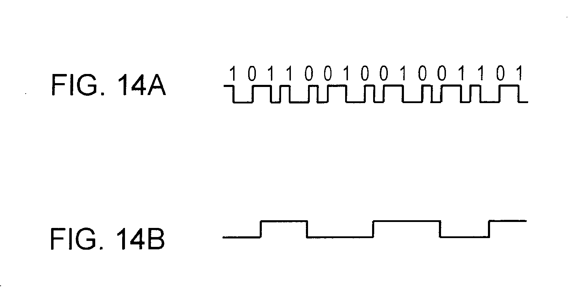

An exemplary setting of the sync signal (SYNC) is described with reference to Figs. 14A and 14B. Figs. 14A and 14B show the following exemplary signals.

Fig. 14A: Data Signal at Normal Rate (Example of Manchester Code)

Fig. 14b: Sync Signal (SYNC) for Training Data Detection

The data signal at a normal rate (example of Manchester code) shown in Fig. 14A is an example of encoded data utilized in the payload and the like of a packet.

The sync signal (SYNC) for training data detection shown in Fig. 14B is set to have a waveform that vary at long intervals compared to the normal data shown in Fig. 14A. That is, the sync signal (SYNC) for training data detection is set to have a frequency lower than the frequency of the normal data.

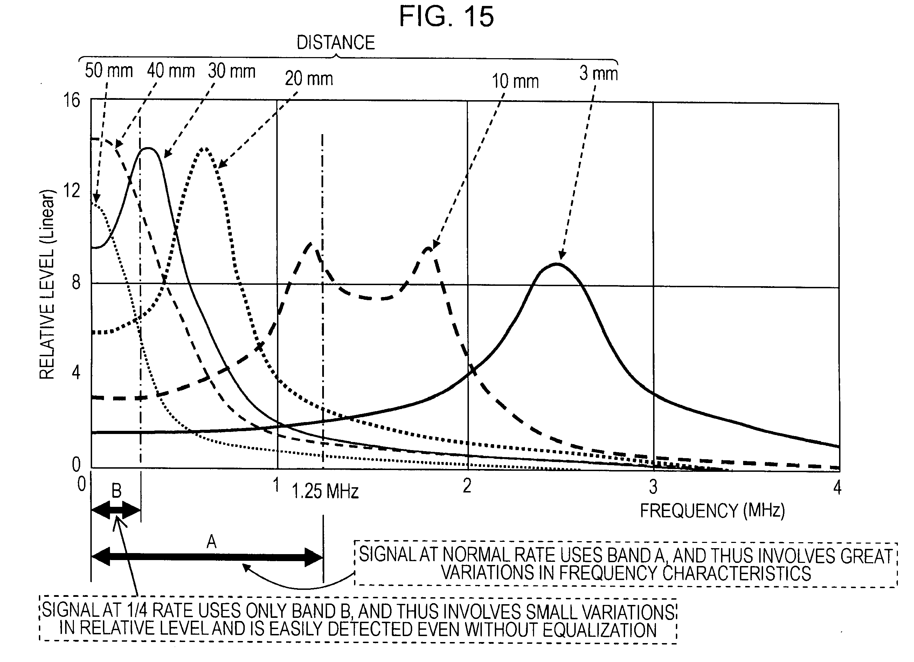

As shown in Fig. 14, the packet generation section of the communication apparatus at the data sender generates a packet in which the signal region (or frequency) of the sync signal (SYNC) is low compared to the signal region (or frequency) of other constituent data in the packet, and transmits the generated packet. It is possible to accurately detect the sync signal (SYNC) without performing an equalization process if the sync signal (SYNC) is a low-frequency signal as shown in Fig. 14. This is described with reference to Fig. 15.

Fig. 15 shows the frequency characteristics of the baseband signal (signal after the wave detection), which is similar to Fig. 6. As described above, the characteristics may vary in accordance with the coupling coefficient k and the antenna distance. If it is assumed that the lowest wavelength repetition frequency utilized in normal data transmission is 1.25 MHz, the normal data transmission utilizes a band A of 0 to 1.25 MHz. In the band A, the signal level varies greatly irrespective of the antenna distance, and thus accurate signal detection may be difficult without performing a correction process, that is, an equalization process.

Meanwhile, the sync signal (SYNC) shown in Fig. 14B, for example, has a waveform that vary at intervals longer than the intervals for the stationary data. That is, the sync signal (SYNC) has a frequency lower than the frequency of the stationary data such as payload.

It is assumed that the stationary data such as payload has a maximum frequency of 1.25 MHz. In this case, the stationary data are used in the band A indicated in Fig. 15.

On the other hand, it is assumed that the sync signal (SYNC) shown in Fig. 14B has a frequency corresponding to 4 times the frequency of 1.25 MHz, the sync signal (SYNC) is used in a band B indicated in Fig. 15. In the band B, as shown in Fig. 15, the signal level varies only slightly in accordance with the antenna distance. In the band B, the signal level varies only slightly as described above, and thus accurate signal detection may be performed relatively easily without performing a correction process, that is, an equalization process.

It is necessary that the communication apparatus at the recipient detect the sync signal (SYNC) from a signal that is not subjected to an equalization process. However, it is only necessary to detect a signal in a relatively stable frequency region, and it is therefore possible to accurately detect the sync signal for training data detection.

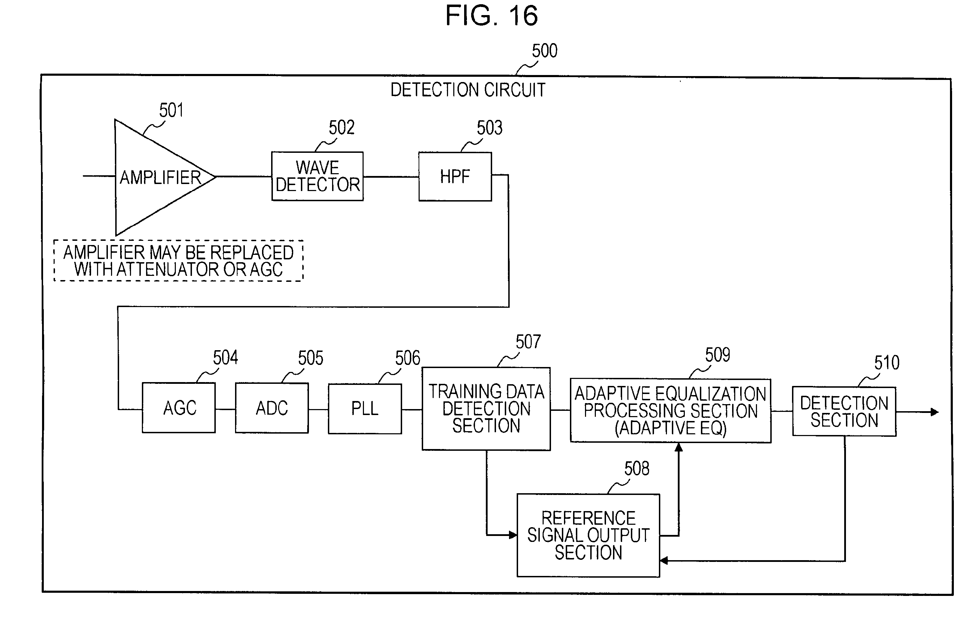

Fig. 16 shows an exemplary configuration of the detection circuit of the reception apparatus that receives a packet provided with the sync signal (SYNC) shown in Fig. 14B to perform a training process.

The detection circuit 500 shown in Fig. 16 corresponds to the detection circuit 110 of the reader/writer 100 or the detection circuit 210 of the transponder 200 shown in Fig. 8.

The detection circuit 500 extracts transmitted information superimposed on a carrier signal contained in a signal received via a coil functioning as an antenna to extract a [1/0] bit string forming received information.

As shown in Fig. 16, the detection circuit 500 includes an amplifier 501, a wave detector 502, a high-pass filter (HPF) 503, an automatic gain controller (AGC) 504, an analog-digital converter (ADC) 505, a PLL 506, a training data detection section 507, a reference signal output section 508, an adaptive equalization circuit (adaptive EQ) 509, and a detection section 510.

The amplifier 501 through the PLL 506 perform the same processes as the processes described above with reference to Figs. 9 and 10. A signal received via an antenna is amplified or attenuated at an appropriate ratio by the amplifier 501 so as to have a sufficient amplitude. An output of the amplifier 501 is input to the wave detector 502. The wave detector 502 performs a wave-detection process to extract information on the amplitude of the amplified signal. The wave detector 502 receives information superimposed on the carrier signal, and analyzes variations in the envelope of the carrier signal to generate a wave-detection signal containing the received information.

The wave-detection signal from the wave detector 502 is input to the HPF 503. The HPF 503 removes direct-current components from the wave-detection signal to set the midpoint potential of the waveform to the zero level, generating a wave-detection waveform from which DC offset has been removed. Thus, [signal S5d] described above with reference to Fig. 10 is obtained.

An output of the HPF 503, that is, the wave-detection waveform from which DC offset has been removed, is subjected to gain control performed by the AGC 504, and is then input to the ADC 505 to be converted into a digital signal.

Then, the digital signal is input to the PLL 506. The PLL 506 performs a PLL process in accordance with the data rate clock, and inputs the PLL process results to the training data detection section 507.

The training data detection section 507 receives the PLL process results, and detects a sync signal (SYNC) from a packet. It is necessary that the training data detection section 507 detect a sync signal (SYNC) from a signal that is not subjected to an equalization process. As described above with reference to Figs. 14A, 14B, and 15, however, the sync signal (SYNC) is a narrow-band signal at a low frequency compared to other constituent data of the packet such as payload. Thus, it is only necessary for the training data detection section 507 to detect a signal in a relatively stable frequency region, and it is therefore possible to accurately detect the sync signal for training data detection.

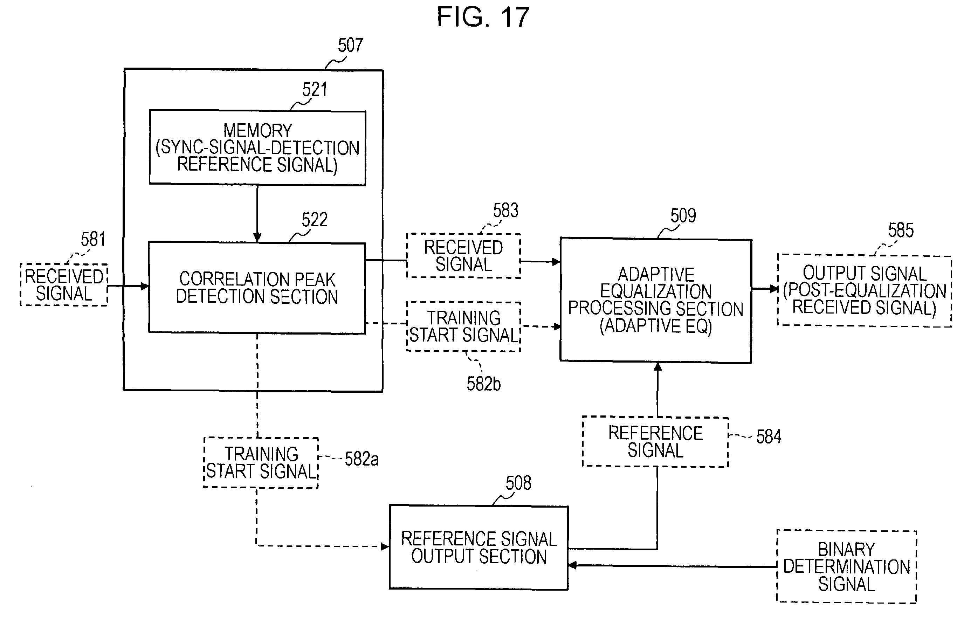

A specific configuration of the training data detection section 507 and an exemplary process performed by the training data detection section 507 are described with reference to Fig. 17. As shown in Fig. 17, the training data detection section 507 includes a memory 521 storing a sync-signal-detection reference signal and a correlation peak detection section 522. The correlation peak detection section 522 receives a received signal 581 as the PLL process results.

The correlation peak detection section 522 detects a correlation peak between the sync-signal-detection reference signal stored in the memory 521 and the received signal 581. The sync-signal-detection reference signal stored in the memory 521 is the same as the sync signal (SYNC) contained in a received packet. An example of the signal is shown in Fig. 14B.

The correlation peak detection section 522 calculates the correlation between the received signal string and the sync-signal-detection reference signal acquired from the memory 521, and determines a position with a high correlation value as the position of the sync signal (SYNC).

When the sync signal (SYNC) is detected through correlation peak detection performed by the correlation peak detection section 522, the training data detection section 507 outputs training start signals 582a and 582b to the reference signal output section 508 and the adaptive EQ 509, respectively. A received signal 583 is also supplied to the adaptive EQ 509.

When the training start signal 582a is input from the training data detection section 507, the reference signal output section 508 generates a reference signal 584 for training purposes, or acquires it from a memory, and outputs the reference signal 584 to the adaptive EQ 509. After outputting the reference signal 584 for training purposes, the reference signal output section 508 generates a reference signal 584 for tracking purposes on the basis of a [1/0] binary signal input from the detection section 510, and outputs it to the adaptive EQ 509.

When the training start signal 582b is input from the training data detection section 507, the adaptive EQ 509 generates starts training utilizing the reference signal 584 input from the reference signal output section 508.

The adaptive EQ 509 has the same configuration as described above with reference to Fig. 11. As shown in Fig. 11, the adaptive EQ 509 includes an FIR filter section 351 and a filter coefficient setting section 352. The reference signal 372 shown in Fig. 11 corresponds to the reference signal 584 input from the reference signal output section 508 shown in Fig. 17.

The adaptive EQ 509 performs a training process, in which the training data bits contained in the received signal 583 are utilized, utilizing the reference signal 584 input from the reference signal output section 508.

In the packet 400, as described above with reference to Fig. 13, the training data bits follow the sync signal (SYNC) 401. This ensures that the adaptive EQ 509 starts the training process at the starting position of the training data bits.

The adaptive EQ 509 performs the training process described above with reference to Fig. 11 utilizing the training data bits contained in the received signal 583 and the reference signal 584 input from the reference signal output section 508. The adaptive EQ 509 determines the filter coefficient (tap coefficient) in the adaptive EQ 509 through the training process.

After the completion of the training process, an optimum equalization process employing the determined filter coefficient (tap coefficient) is made possible. Then, the adaptive EQ 509 sets the step gain value $\alpha$ to be smaller, performs an adaptive equalization process on packet-constituent data elements following the training data bits, such as packet length and payload, utilizing the optimum filter coefficients successively updated while performing tracking, and outputs a signal (post-equalization received signal) 585 shown in Fig. 17.

The digital signal which has been subjected to the correction (equalization) process performed by the adaptive EQ 509 is input to the detection section 510 shown in Fig. 16. The detection section 510 receives a corrected wave-detection signal as the digital signal generated by the adaptive EQ 509, and detects received information. The detection section 510 outputs a [1/0] binary signal on the basis of the corrected digital signal.

In the detection circuit 500 shown in Fig. 16, as described above, the training data detection section 507 detects the sync signal (SYNC) from packet-constituent data elements, and causes the adaptive EQ 509 to start training using the detected sync signal (SYNC) as a trigger.

This enables the adaptive EQ 509 to reliably start training in which the training data bits of a packet are utilized. Consequently, it is possible to perform an equalization process on data elements following the training data bits such as payload under optimum equalization characteristics, that is, employing an optimum filter coefficient (tap coefficient), enabling high-precision detection of a received signal.

During the training process, the reference signal 584 output from the reference signal output section 508 shown in Figs. 16 and 17 to the adaptive EQ 509 is the same bit string as the training data bits contained in a packet. The bit string may be an M-sequence which is a pseudo-random binary sequence, for example. During the tracking process, meanwhile, the reference signal 584 is a bit string generated on the basis of a binary signal obtained through [1/0] determination performed by the detection section 510.

In the case where an M-sequence is employed as the training data, the reference signal output section 508 is configured to include an M-sequence generator that generates with the same polynomial and the same initial value as those at the sender. An M-sequence signal generated by the M-sequence generator is supplied to the adaptive EQ 509 as the reference signal 584 shown in Fig. 17.

The reference signal 584 output from the reference signal output section 508 to the adaptive EQ 509 is not necessarily an M-sequence, and may be other types of bit strings. The reference signal 584 may only be the same bit string as the training data bits contained in a packet, which is known in advance to both the sender and the recipient. Thus, the reference signal 584 is not necessarily a signal generated by an M-sequence generator, and may be a signal generated by other common types of signal generators or common fixed data stored in memories of both the sender and the recipient.

[2-2. Example in which Training-exclusive Packet Is Utilized]

Now, an example in which a training-exclusive packet is utilized is described.

The frame format according to Example 2-1 discussed previously is obtained by modifying the frame format according to the related art as described with reference to Fig. 13, such that training data bits are added and the sync signal (SYNC) 401 is set appropriately.

In the case where the maximum frame length is constant, it is necessary to reduce data elements of the frame format shown in Fig. 13 other than the training data bits which have been added. This may result in a decrease in the proportion of the payload (Payload), and hence a reduction in the data transmission efficiency.

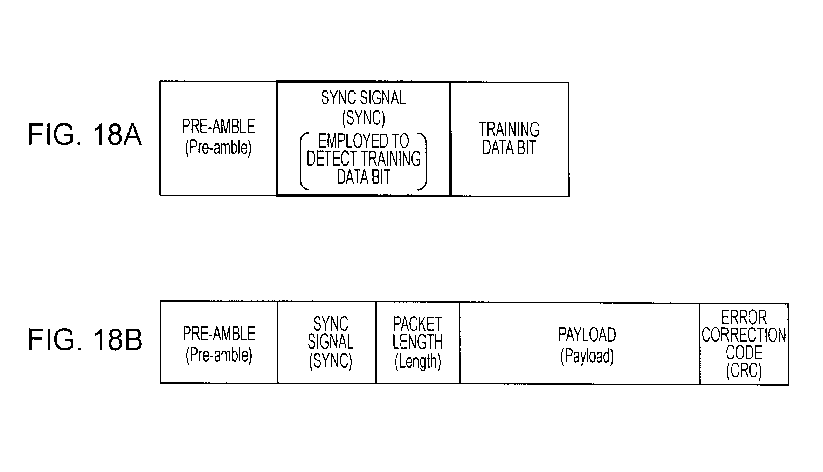

In view of the above, an embodiment in which a training-exclusive packet and a normal data packet are provided individually is described below. The following two types of packets shown in Figs. 18A and 18B are individually provided and utilized.

(a) Training-exclusive packet
(b) Normal data packet

The two packets shown in Figs. 18A and 18B are generated and transmitted by a packet generation section of the communication apparatus at the data sender.

As shown in Fig. 18A, the training-exclusive packet has a frame format with a pre-amble, a sync signal (SYNC), and training data bits. The sync signal (SYNC) is the same as the sync signal described above with reference to Fig. 13. That is, the sync signal (SYNC) is utilized to detect the starting position of the training data bits. The training data bits are provided immediately after the sync signal (SYNC), and the adaptive equalization processing section starts training in response to detecting the sync signal (SYNC). This ensures that training in which the training data bits are utilized is started. The sync signal (SYNC) is preferably set as a bit string insusceptible to distortion caused in the channel (transfer path). This is because the position detection is performed before the equalization processing section corrects (equalizes) the received data. Specifically, the training data bits may be set as data with the configuration described above with reference to Fig. 14B, for example. The rest of the data elements are the same as the data elements described with reference to Figs. 12 and 13.

Since the training-exclusive packet shown in Fig. 18A is provided with a sync signal to be utilized as a sync signal for training data detection, the recipient apparatus is allowed to start training at the starting position of the training data bits on the basis of detecting the sync signal (SYNC) as described previously in relation to Embodiment 2-1 with reference to Figs. 16 and 17.

The normal data packet shown in Fig. 18B has a frame format with a pre-amble, a sync signal, a packet length, a payload, and an error correction code. The respective data elements are the same as the corresponding data elements described with reference to Fig. 12. The sync signal of the normal data packet is not necessarily a low-frequency signal as with the sync signal of the training-exclusive packet, and may be a data string at a normal rate as shown in Fig. 14A.

For example, the training-exclusive packet shown in Fig. 18A is utilized only in the case where it is necessary to perform training of the equalization processing section at the data recipient. In other cases, the normal data packet shown in Fig. 18B is utilized to enable data communication without reducing the proportion of the payload in a packet.

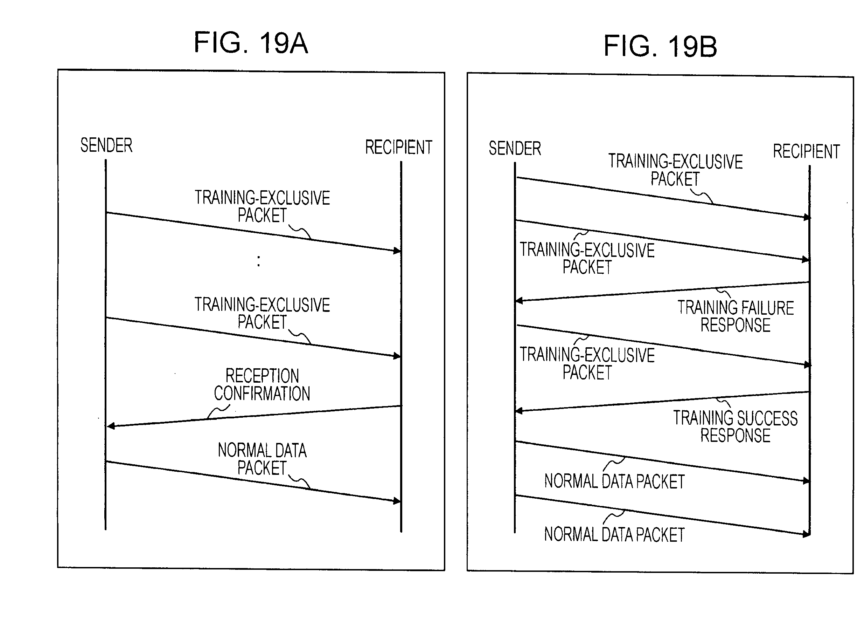

An exemplary sequence of communication in which the two types of packets described above are utilized is described with reference to Figs. 19A and 19B. The configuration of the transmission and reception apparatuses in the embodiment may be the same as the configuration of the corresponding apparatuses in Embodiment 1.

Figs. 19A and 19B each show an exemplary communication sequence.

Fig. 19A shows a sequence described below.

After the start of data communication between the sender and the recipient, the sender continuously transmits only a training-exclusive packet to the recipient. After receiving a confirmation of the reception of the training-exclusive packet from the recipient, the sender transmits only a normal data packet.

According to the communication sequence, it is possible for the recipient to perform a training process in which the training-exclusive packet transmitted from the sender is utilized before the reception of the normal data packet. That is, the recipient first determines the filter coefficient to be set in the equalization processing section through the training process in which the training-exclusive packet is utilized, and optimizes the equalization processing section. Then, the recipient receives the normal data packet, and performs an equalization process with the equalization processing section optimized for the normal data packet, allowing high-precision analysis of the received data.

Fig. 19B shows a sequence described below.

After the start of data communication between the sender and the recipient, the sender continuously transmits only a training-exclusive packet to the recipient. The process is the same as in the process according to the sequence shown in Fig. 19A. In the sequence shown in Fig. 19B, the recipient transmits to the sender information indicating whether or not a training process employing the training-exclusive packet has been performed successfully.

The recipient performs a training process using the training-exclusive packet received from the sender, and determines the filter coefficient to be set in the equalization processing section. If the training process is performed successfully, the recipient transmits a success response to the sender. If the training process results in failure, the recipient transmits a failure response to the sender.

If a failure response is received from the recipient, the sender continues to transmit the training-exclusive packet. If a success response is received from the recipient, the sender stops transmitting the training-exclusive packet, and starts to transmit a normal data packet.

According to the communication sequence, it is possible for the sender to reliably have the knowledge of whether or not the recipient has successfully performed training employing the training-exclusive packet, reducing the error occurrence rate for the following normal data packet at the recipient.

The series of processes described herein may be performed by means of hardware, software, or a combination thereof. In the case where the processes are performed by means of software, a program in which the sequence of processes is recorded may be installed on a memory in a computer incorporating dedicated hardware, or installed on a general-purpose computer capable of performing various processes.

The present application contains subject matter related to that disclosed in Japanese Priority Patent Application JP 2008-297629 filed in the Japan Patent Office on November 21, 2008 and Japanese Priority Patent Application JP 2009-167461, the entire content of which is hereby incorporated by reference.

The present invention has been described above in detail with reference to specific embodiments of the present invention. It should be apparent, however, that those skilled in the art may modify or alter the embodiments without departing from the scope and spirit of the present invention. In other words, the present invention has been disclosed illustratively, and should not be construed as limitative. In order to judge the scope and spirit of the present invention, the appended claims should be referred to.

**Claims**

1. A communication apparatus comprising:

   a signal detection section that detects received information from a signal received through wireless communication, the signal detection section including
   a wave detection section that receives a signal in which the received information is superimposed on a carrier signal and that analyzes variations in an envelope of the received signal to generate a wave-detection signal containing the received information;
   an equalization processing section that corrects the wave-detection signal to output a corrected wave-detection signal;
   a detection section that receives the corrected wave-detection signal generated by the equalization processing section to detect the received information; and
   a training data detection section that detects from the received signal a training-data-detection sync signal allowing detection of training data utilized to optimize equalization characteristics of the equalization processing section,

   wherein the equalization processing section starts a training process, in which the training data contained in the received signal are utilized, on the basis of the sync signal detected by the training data detection section.

2. The communication apparatus according to claim 1,
   wherein the equalization processing section includes:

   a filter section that performs a filtering process employing a filter coefficient; and
   a filter coefficient setting section that outputs the filter coefficient to the filter section, and

   wherein the filter coefficient setting section updates the filter coefficient so as to reduce an error between an output of the filter section and a predefined reference signal in the training process in which the training data are utilized.

3. The communication apparatus according to claim 2,
   wherein the equalization processing section includes an FIR (Finite Impulse Response) filter.

4. The communication apparatus according to claim 2 or 3, further comprising:

   an analog-digital converter that performs a digital conversion process on the wave-detection signal generated by the wave detection section to generate a digital signal,

   wherein the equalization processing section receives the digital signal, filters the digital signal employing the filter coefficient to generate a corrected digital signal, and outputs the corrected digital signal to the detection section.

5. The communication apparatus according to any of claims 2 to 4, further comprising:

   a reference signal output section that outputs to the equalization processing section the reference signal utilized in the training process performed by the equalization processing section,

   wherein the reference signal output section outputs the reference signal to the equalization processing section on the basis of the sync signal detected by the training data detection section.

**6.** The communication apparatus according to any of the preceding claims,
wherein the training data detection section includes a correlation detection section that detects correlation with the received signal using a reference signal that has a signal pattern identical to that of the sync signal and that is contained in the received signal, and
wherein a position at which the correlation is at its peak that is detected by the correlation detection section is determined to be a position of the training-data-detection sync signal.

**7.** A communication apparatus comprising:

a packet generation section that generates data to be transmitted through wireless communication; and
a transmission section that outputs a packet generated by the packet generation section,

wherein the packet generation section generates a packet containing training data allowing determination of optimum equalization characteristics of an equalization processing section of a data recipient, and a sync signal allowing detection of a position of the training data.

**8.** The communication apparatus according to claim 7,
wherein the packet generation section generates a packet in which the sync signal is in a signal region at a low frequency compared to other constituent data in the packet.

**9.** A communication frame format for a packet to be transferred through wireless communication, comprising:

training data allowing determination of optimum equalization characteristics of an equalization processing section of a data recipient; and
a sync signal allowing detection of a position of the training data,

wherein the data recipient which receives the packet is enabled to start training, in which the training data are utilized, in response to detecting the sync signal from the received packet.

**10.** The communication frame format according to claim 9,
wherein the sync signal is in a signal region at a low frequency compared to other constituent data in the packet.

**11.** A signal processing method performed in a communication apparatus that receives data through wireless communication, comprising the steps of:

a training data detection section detecting from a received signal a training-data-detection sync signal allowing detection of training data utilized to optimize equalization characteristics of an equalization processing section; and
the equalization processing section starting a training process, in which the training data contained in the received signal are utilized, in response to the training data detection section detecting the training-data-detection sync signal.

**12.** A signal processing method performed in a communication apparatus that generates data to be transmitted through wireless communication, comprising the steps of:

a packet generation section generating a packet to be transmitted; and
a transmission section outputting the packet generated by the packet generation section,

wherein the packet generation step includes generating a packet containing training data allowing determination of optimum equalization characteristics of an equalization processing section of a data recipient, and a sync signal allowing detection of a position of the training data.

EP 2 190 156 A2

**FIG. 1A**

READER/WRITER ~10

TRANSMITTED INFORMATION (212 kbps)

S1b

AMPLITUDE MODULATION

S1c

S1a

CARRIER SIGNAL (13.56 MHz)

MODULATOR

TRANSMISSION AMPLIFIER

TRANSPONDER ~20

S1d

DETECTION CIRCUIT 21

**FIG. 1B**

ENLARGE ALONG TIME AXIS

S1a — CARRIER SIGNAL WAVEFORM

S1b — TRANSMITTED INFORMATION WAVEFORM

S1c — TRANSMITTED SIGNAL WAVEFORM

S1d — RECEIVED SIGNAL WAVEFORM

TRANSFER PATH CHARACTERISTICS ATTENUATE AMPLITUDE OF SIGNAL S1c TO REDUCE VARIATION RATE OF AMPLITUDE

FIG. 2A

FIG. 2B

EP 2 190 156 A2

# FIG. 3

ANTENNA DISTANCE (mm)

0.5    6    30    50    100

RECEPTION ANTENNA LEVEL (VOLTAGE, RELATIVE VALUE)

FREQUENCY (MHz)

13.56 MHz

EP 2 190 156 A2

FIG. 4A

FIG. 4B

IMPEDANCE $Z_{0(s)}$ OF PART ON THE RIGHT OF POINT P INDICATED BY ARROW IN FIG. 4A IS GIVEN BY:

$$Z_{0(s)} = \frac{G_{(s)}}{\{s^2 + CL(k+1)\} + \{s^2 + CL(k-1)\}}$$

WHERE k IS COUPLING COEFFICIENT AND $G_{(s)}$ IS CUBIC FUNCTION OF s
ZERO IN NUMERATOR DOES NOT AFFECT $f_0$ AND THEREFORE IS OMITTED

RESONANT FREQUENCIES $\omega_{01}$ AND $\omega_{02}$ (ROOTS OF s IN DENOMINATOR OF FORMULA) ARE GIVEN BY:

$$\omega_{01} = \frac{1}{\sqrt{CL}} \cdot \frac{1}{\sqrt{1+k}} \qquad \omega_{02} = \frac{1}{\sqrt{CL}} \cdot \frac{1}{\sqrt{1-k}}$$

FIG. 5

EP 2 190 156 A2

FIG. 6

FIG. 7A

S3a    31    S3b    32    S3c    33    S3d    34    S3e

AMPLIFIER    WAVE DETECTOR    HPF    COMPARATOR

AMPLIFIER MAY BE REPLACED WITH ATTENUATOR OR AGC

AGC :AUTOMATIC GAIN CONTROL AMPLIFIER
HPF :HIGH-PASS FILTER

FIG. 7B

S3a — INPUT WAVEFORM

S3b — AMPLIFIED INPUT WAVEFORM    ⇐ AMPLIFY (OR ATTENUATE) WITH APPROPRIATE RATIO SO AS TO HAVE SUFFICIENT AMPLITUDE AFTER WAVE DETECTION

S3c — WAVE-DETECTION WAVEFORM    — · — · — POTENTIAL OF DC 0

S3d — WAVE-DETECTION WAVEFORM FROM WHICH DC OFFSET HAS BEEN REMOVED    ⇐ SET MIDPOINT POTENTIAL OF WAVEFORM TO ZERO LEVEL

S3e — RECEIVED INFORMATION WAVEFORM    ⇐ COMPARE USING ZERO LEVEL AS THRESHOLD

EP 2 190 156 A2

# FIG. 8

EP 2 190 156 A2

# FIG. 9

**340 DETECTION CIRCUIT**

S5a — 341 AMPLIFIER — S5b — 342 WAVE DETECTOR — S5c — 343 HPF — S5d

*AMPLIFIER MAY BE REPLACED WITH ATTENUATOR OR AGC*

344 AGC — 345 ADC — 346 PLL — 347 ADAPTIVE EQUALIZATION PROCESSING SECTION (ADAPTIVE EQ) — 348 DETECTION SECTION — S5e

# FIG. 10

SIGNAL WAVEFORM

S5a ——— INPUT WAVEFORM

S5b ——— AMPLIFIED INPUT WAVEFORM ⇐ AMPLIFY (OR ATTENUATE) WITH APPROPRIATE RATIO SO AS TO HAVE SUFFICIENT AMPLITUDE AFTER WAVE DETECTION

S5c ——— WAVE-DETECTION WAVEFORM ┆— · — · — POTENTIAL OF DC 0┆

S5d ——— WAVE-DETECTION WAVEFORM FROM WHICH DC OFFSET HAS BEEN REMOVED ⇐ SET MIDPOINT POTENTIAL OF WAVEFORM TO ZERO LEVEL

⇩

EQ

⇩

S5e ——— RECEIVED INFORMATION WAVEFORM ⇐ COMPARE USING ZERO LEVEL AS THRESHOLD

EP 2 190 156 A2

# FIG. 11

EP 2 190 156 A2

# FIG. 12

| PRE-AMBLE (Pre-amble) | SYNC SIGNAL (SYNC) | TRAINING DATA BIT | PACKET LENGTH (Length) | PAYLOAD (Payload) | ERROR CORRECTION CODE (CRC) |
|---|---|---|---|---|---|

| | |
|---|---|
| PRE-AMBLE (Pre-amble) | NORMALLY, A SIMPLE PATTERN SUCH AS REPEATED SINGLE-WAVELENGTH SIGNALS<br><br>THE PRE-AMBLE IS USED TO INDICATE THAT RECEPTION OF THE PACKET HAS BEEN STARTED OR TO SYNCHRONIZE THE CLOCK OF A RECEPTION CIRCUIT |
| SYNC SIGNAL (SYNC) | A KNOWN PATTERN UTILIZED IN A SYNCHRONIZATION PROCESS<br><br>A RECIPIENT INCLUDES A COMPARISON CIRCUIT EXCLUSIVELY FOR A SYNC PATTERN TO COMPARE DATA WITH THE SYNC PATTERN EACH TIME THE DATA ARE UPDATED BY ONE CLOCK<br><br>IF THE DATA COINCIDE WITH THE SYNC PATTERN, IT IS JUDGED THAT THAT PORTION OF THE DATA CORRESPONDS TO THE HEAD OF THE PACKET |
| TRAINING DATA BIT | A BIT STRING UTILIZED TO DETERMINE THE EQUALIZATION CHARACTERISTICS, THAT IS, THE FILTER COEFFICIENT (TAP COEFFICIENT), IN AN ADAPTIVE EQUALIZATION CIRCUIT |
| PACKET LENGTH (Length) | DATA REPRESENTING THE LENGTH OF THE PACKET<br><br>THE LENGTH VALUE IS IMPORTANT; IF THE LENGTH VALUE IS ERRONEOUS, SUBSEQUENT DATA MAY NOT BE DECODED NORMALLY IN MANY CASES<br><br>A PARITY FOR THE DETECTION/CORRECTION OF AN ERROR IN THE LENGTH INFORMATION MAY BE PROVIDED IN THE LENGTH AREA TO PROVIDE AN ERROR CORRECTION CAPABILITY |
| PAYLOAD (Payload) | INFORMATION TO BE COMMUNICATED<br><br>INFORMATION TO BE COMMUNICATED PROPER<br><br>THE PAYLOAD MAY CONTAIN A PARITY FOR THE DETECTION/CORRECTION OF AN ERROR IN DATA |
| ERROR CORRECTION CODE (CRC) | A CODE FOR ERROR CORRECTION |

EP 2 190 156 A2

# FIG. 13

400

401

| PRE-AMBLE (Pre-amble) | SYNC SIGNAL (SYNC) { EMPLOYED TO DETECT TRAINING DATA BIT } | TRAINING DATA BIT | PACKET LENGTH (Length) | PAYLOAD (Payload) | ERROR CORRECTION CODE (CRC) |
|---|---|---|---|---|---|

IN ADDITION TO BEING USED AS NORMAL SYNC SIGNAL, SYNC SIGNAL IS EMPLOYED TO DETECT TRAINING DATA BIT

THEREFORE, SYNC SIGNAL IS SET AS BIT STRING INSUSCEPTIBLE TO DISTORTION CAUSED IN CHANNEL (TRANSFER PATH)

EP 2 190 156 A2

FIG. 14A

1 0 1 1 0 0 1 0 0 1 0 0 1 1 0 1

FIG. 14B

FIG. 15

RELATIVE LEVEL (Linear) vs FREQUENCY (MHz)

DISTANCE: 3 mm, 10 mm, 20 mm, 30 mm, 40 mm, 50 mm

1.25 MHz

A

B

SIGNAL AT NORMAL RATE USES BAND A, AND THUS INVOLVES GREAT VARIATIONS IN FREQUENCY CHARACTERISTICS

SIGNAL AT 1/4 RATE USES ONLY BAND B, AND THUS INVOLVES SMALL VARIATIONS IN RELATIVE LEVEL AND IS EASILY DETECTED EVEN WITHOUT EQUALIZATION

FIG. 16

DETECTION CIRCUIT 500

- 501 AMPLIFIER
- 502 WAVE DETECTOR
- 503 HPF
- AMPLIFIER MAY BE REPLACED WITH ATTENUATOR OR AGC
- 504 AGC
- 505 ADC
- 506 PLL
- 507 TRAINING DATA DETECTION SECTION
- 508 REFERENCE SIGNAL OUTPUT SECTION
- 509 ADAPTIVE EQUALIZATION PROCESSING SECTION (ADAPTIVE EQ)
- 510 DETECTION SECTION

# FIG. 17

507
521
MEMORY
(SYNC-SIGNAL-DETECTION
REFERENCE SIGNAL)

581
RECEIVED
SIGNAL

522
CORRELATION PEAK
DETECTION SECTION

583
RECEIVED
SIGNAL

TRAINING
START SIGNAL

582b

509
ADAPTIVE
EQUALIZATION
PROCESSING SECTION
(ADAPTIVE EQ)

585
OUTPUT SIGNAL
(POST-EQUALIZATION
RECEIVED SIGNAL)

TRAINING
START SIGNAL          582a

REFERENCE
SIGNAL          584

508
REFERENCE SIGNAL
OUTPUT SECTION

BINARY
DETERMINATION
SIGNAL

EP 2 190 156 A2

**FIG. 18A**

| PRE-AMBLE (Pre-amble) | SYNC SIGNAL (SYNC) [EMPLOYED TO DETECT TRAINING DATA BIT] | TRAINING DATA BIT |
| --- | --- | --- |

**FIG. 18B**

| PRE-AMBLE (Pre-amble) | SYNC SIGNAL (SYNC) | PACKET LENGTH (Length) | PAYLOAD (Payload) | ERROR CORRECTION CODE (CRC) |
| --- | --- | --- | --- | --- |

## FIG. 19A

SENDER — RECIPIENT

TRAINING-EXCLUSIVE PACKET

:

TRAINING-EXCLUSIVE PACKET

RECEPTION CONFIRMATION

NORMAL DATA PACKET

## FIG. 19B

SENDER — RECIPIENT

TRAINING-EXCLUSIVE PACKET

TRAINING-EXCLUSIVE PACKET

TRAINING FAILURE RESPONSE

TRAINING-EXCLUSIVE PACKET

TRAINING SUCCESS RESPONSE

NORMAL DATA PACKET

NORMAL DATA PACKET

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI01202954 B
- JP 2004297536 A
- JP 2008297629 A
- JP 2009167461 A